# EUROPEAN PATENT APPLICATION

(11) **EP 0 818 861 A1**
(43) Date of publication of application: **14.01.1998**
(21) Application number: 97202051.5
(22) Date of filing: 03.07.1997
(51) Int. Cl.: H02B 1/38, H05K 5/06

(54) **Sealed door for containers of electrical equipment**

(30) Priority: 10.07.1996 IT MI961426
(71) Applicant: SIFE INDUSTRIALE S.p.A., I-Milano (IT)
(72) Inventor: Balzanelli, Vincenzo, Milano (IT)
(74) Representative: Raimondi, Alfredo, Dott. Ing. Prof.

(57) **Abstract**

Sealed door, for containers (40) of electrical equipment and the like, comprising a perimetral frame (1) consisting of profiled members (10) connected together by means of angular joints (20) and a panel (30) fixed on said frame, characterized in that each of said joints (20) consists of a substantially parallelepiped member, with at least two surfaces (22a, 22b) which are adjacent to one another and from which there extend towards the outside male members (22) designed to be engaged with associated cavities (10c) of the said profiled members (10) to which they can be secured via associated locking means (22c, 23), on the inner front surface of said joints there being formed at least two seats (21, 28) for housing a corresponding section of associated sealing gaskets (12, 14), extending over the entire perimeter of the frame (1) and housed in corresponding seats (11, 13) of said profiled members (10).

## Description

The present invention relates to a sealed door for cabinets containing electrical equipment. It is known that a lot of electrical equipment, such as the electric consoles for distribution and/or control of electric energy, are normally installed inside metal containers which are mounted on the ground or wall or are inset and which are provided with one or more internal compartments and a front door for access to the equipment.

It is also known that these doors are made by means of stamped metal sheets, or using profiled members, cut with their ends inclined at forty five degrees and connected together by means of internal reinforcements so as to form a perimetral frame supporting a central glass panel or the like.

Said doors must comply with the various safety standards, including that of providing a seal against infiltration of water, dust or the like so as to avoid the risk of short-circuits and/or damage to the electrical equipment mounted inside the container.

The technical problem which is posed, therefore, is that of providing a door for cabinets and/or similar containers for electrical equipment which is sealed, both at the joint between the glass and frame of the door and at the point of internal contact of the door with the frame of the container.

Within the scope of this technical problem a further requirement is that the door should consist of a limited number of parts which can be assembled with one another and disassembled with ease so as to facilitate any maintenance operations, such as for example the replacement of the central panel, and reduce production costs, but at the same time ensure a high degree of rigidity of the door itself which prevents possible warping thereof which would result in discontinuous contact of the door such as to cause loss of the sealing effect.

In addition, it is required that the door assembled and fitted to the container should permit an external finish such that it may have a pleasing aesthetic appearance.

These results are obtained by the present invention which provides a sealed door, for containers of electrical equipment and the like, comprising a perimetral frame consisting of profiled members connected together by means of angular joints and a panel fixed on said frame, in which each of said joints consists of a substantially parallelepiped member, with at least two surfaces which are adjacent to one another and from which there extend outwards male members designed to be engaged with associated cavities of the said profiled members to which they can be secured via associated locking means, on the inner front surface of said joints there being formed at least two seats for housing a corresponding section of associated sealing gaskets, extending along the entire perimeter of the frame and housed in corresponding seats of said profiled members.

Further details may be obtained from the following description of an example of embodiment of the invention, provided with reference to the accompanying drawings, in which:
Figure 1 shows an exploded view of a sealed door according to the present invention;
Figure 2 shows a plan view from the inner side of the door according to Fig. 1;
Figure 3 shows a cross-section along the plane indicated by III-III in Fig. 2;
Figure 4 shows a container with the door mounted and in a partially open position.

As shown in the Figures, the door according to the invention is composed of a perimetral frame 1 designed to support and retain a central panel 30 and consisting of profiled members 10 connected together by means of angular joints 20.

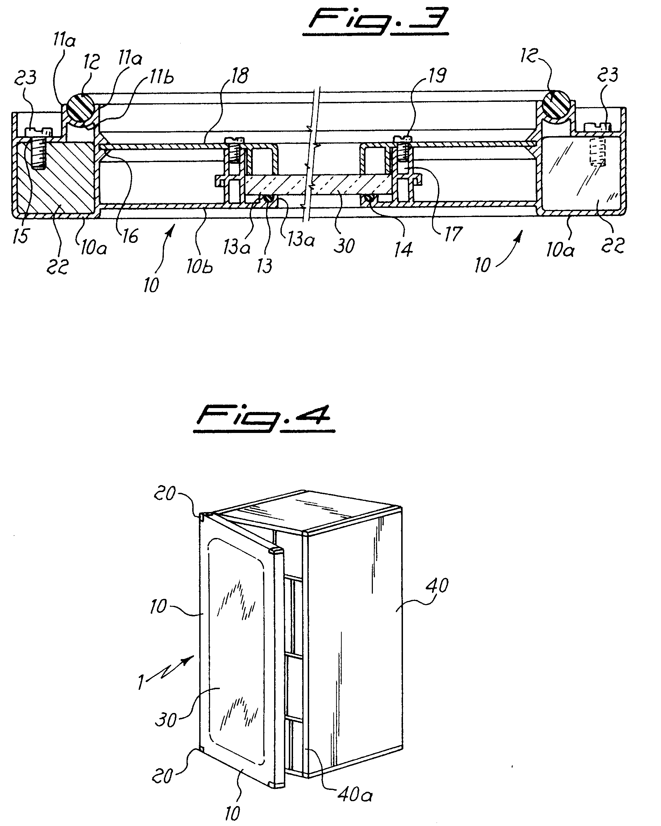

More particularly, the profiled member 10 comprises at least one first part 10a extending in the longitudinal direction and having a substantially square cross-section, for abutment against a corresponding frame 40a of a container 40 (Fig. 4), and at least one flange 10b, extending laterally with respect to said first part 10a and over the entire length of the profiled member, which flange is designed to form a support base for a glass pane 30.

Said part 10a of the profiled member has an internal cavity 10c extending longitudinally along its entire length.

The internal front surface of said first part 10a has formed on it a seat 11 with a substantially semi-circular cross-section, which extends in the longitudinal direction along the entire length of the profiled member and which partially contains inside it a gasket 12 made of rubber or similar material, designed to provide the required seal between door and container 40 once the door is closed up against the container itself.

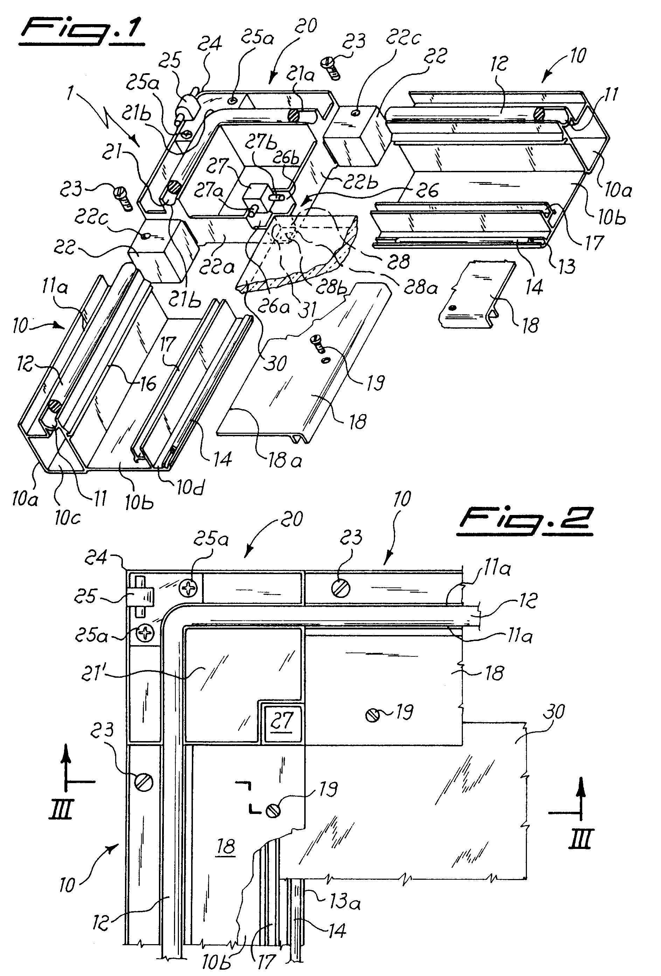

As can be seen from Fig. 3, said seat 11 has upper ends 11a of its wall 11b extending beyond the ideal line corresponding to the diameter of the seat 11; in this way the gasket 12, which has a diameter equal to the diameter of the seat 11, may be forced into the seat itself and stably retained therein by said ends 11a of the wall 11b.

A similar seat 13 extending in the longitudinal direction is formed in the region of the free edge 10d of the said flange 10b of the profiled member intended to be joined to the glass 30 and in this case also the seat 13 has ends 13a of its wall 13b extended beyond the diameter of the seat so as to allow retention of an associated gasket 14 designed to effect the seal between the perimetral frame 1 and the glass 30.

The profiled member 10 also has additional longitudinal grooves 16 and 17 respectively formed on the inner side of the part 10a of the profiled member and in the vicinity of the free edge 10d of the flange 10b, but in a more inward position than the seat 13 of the gasket 14 on which the glass 30 rests. Said grooves 16 and 17 are arranged along planes substantially perpendicular to one another and allow the internal edge 18a of a cover-piece 18 substantially in the form of an overturned "L" to be respectively guided and retained and to be engaged with a self-threading screw 19 for locking said cover-piece, by means of which perimetral locking of the glass 30 on the assembled frame is achieved.

The force exerted by the screw 19 moreover allows the gasket 14 arranged between the profiled member 10 and the glass 30 to be compressed so as to obtain the desired seal in addition to said locking action.

As illustrated, the profiled members 10 are joined together by means of angular joints 20 comprising a body 21 with a substantially square shape in plan view and a cross-section corresponding to that of the profiled members 10.

From the surface of each of the two inner sides 22a, 22b of the joint 20, adjacent to one another, there extends a male member 22 which is substantially cube-shaped and designed to be inserted into the corresponding cavity 10c of the profiled member 10 until the latter comes into contact against the respective surface 22a, 22b of the joint itself.

Said male member 22 has formed on its upper surface a threaded hole 22c which, once the joint has been engaged, is arranged coaxially with respect to a corresponding through-hole 15 in the profiled member 10 so as to allow relative locking by means of a screw 23.

The joint 20 also has formed on it a first seat 21, consisting of two straight sections 21a arranged at 90° with respect to one another and connected by a curved section 21b, corresponding to the seat 11 of the profiled member, allowing the continuity thereof to be maintained along the entire perimeter of the frame 1 once the latter has been assembled, this continuity allowing the sealing gasket 12 to be housed and firmly retained along its whole length.

At the outer corner 24 of the joint 20 there is also arranged a hinge element 25 fixed to the joint by means of screws 25a, said hinge element 25 allowing the door and container to be rotationally joined together as well as mounting for right-hand or left-hand doors.

At the inner corner 26 of the joint there are also provided two triangular seats 26a and 26b respectively designed to form a locating abutment for positioning of the glass 30 and the seat for a block 27 for retaining a corner 31 of the glass 30, which block has two extensions 27a and 27b perpendicular to one another and designed to be arranged inside said grooves 17 where they are locked by the respective cover-pieces 18.

The internal surface of said corner 26 of the joint also has formed in it an additional seat 28 consisting of two straight sections 28a connected by a curved section 28b and corrresponding to the seat 13 for retaining the gasket 14, which seat is therefore also stably positioned at the corner of the joint, enabling the continuity of the seal to be maintained by means of the pressure exerted by the block 27 mentioned.

It is therefore obvious how the door according to the invention allows the desired sealing of the container to be obtained by means of a combination of parts which are structurally simple and may be easily assembled so as to form an extremely rigid frame without the need for additional reinforcements inside the profiled members. Said rigidity also allows the fitting, on the door, of transparent or opaque panels of limited thickness and weight, as well as glass panes or panels of considerable thickness necessary for helping achieve the overall rigidity of the door.

Many variants may be introduced as regards the realization of the parts which make up the invention, without thereby departing from the protective scope of the present invention as defined by the claims which follow.

## Claims

1. Sealed door, for containers (40) of electrical equipment and the like, comprising a perimetral frame (1) consisting of profiled members (10) connected together by means of angular joints (20) and a panel (30) fixed on said frame, characterized in that each of said joints (20) consists of a substantially parallelepiped member, with at least two surfaces (22a, 22b) which are adjacent to one another and from which there extend outwards male members (22) designed to be engaged with associated cavities (10c) of the said profiled members (10) to which they can be secured via associated locking means (22c, 23), on the inner front surface of said joints there being formed at least two seats (21, 28) for housing a corresponding section of associated sealing gaskets (12, 14), extending over the entire perimeter of the frame (1) and housed in corresponding seats (11, 13) of said profiled members (10), there also being provided means (26a, 26b, 27) for housing and retaining a corner (31) of the pane (30) held in position via means (18) which can be secured to said profiled members (10) and designed to exert a pressure on the pane (30) such as to cause adhesion of the latter to one (14) of said continuous gaskets extending along the entire perimeter of the frame (1).

2. Sealed door according to Claim 1, characterized in that said angular joints (20) have the form of a right-angled parallelepiped.

3. Door according to Claim 1, characterized in that said male members (22) for engaging with the cavities (10c) of the profiled members (10) have substantially the form of a right-angled parallelepiped.

4. Door according to Claim 1, characterized in that said means for locking together joint (20) and profiled member (10) consist of a threaded element (23) designed to be engaged in a corresponding female thread (22c) formed in each male member (22).

5. Door according to Claim 1, characterized in that at least two of said joints have associated with them hinge elements (25) arranged at each outer corner (24) so to effect rotational joining to the frame (40a) of the container (40).

6. Door according to Claim 1, characterized in that said means for housing and retaining a corner (31) of the pane (30) consist of two triangular seats (26a, 26b) arranged at the inner corner of the joint itself and designed to form respectively a locating abutment for positioning of the glass (30) and the seat for a block (27) for retaining the glass itself.

7. Door according to Claims 1 and 6, characterized in that said block (27) has two extensions (27a, 27b) designed to be arranged inside grooves (17) of the profiled members (10) inside which they are locked by respective locking means (18).

8. Door according to Claim 1, characterized in that said profiled members (10) comprise at least one first part (10a) extending in the longitudinal direction and internally hollow (10c) and having a substantially square cross-section, for engaging with said extensions (22) of the joint (20), and at least one flange (10b) extending laterally from said first part (10a) and over the entire length of the profiled member and designed to form a support base for the pane (30).

9. Door according to Claim 1, characterized in that said flange (10b) has a seat (13) extending longitudinally along its free edge and designed to contain said gasket (14) providing a seal between frame (1) and pane (30).

10. Door according to Claim 1, characterized in that said profiled member (10) also has two additional longitudinal grooves (16, 17), the first (16) of which is formed on the inner side of the part (10a) of the profiled member and the second one of which is formed in the vicinity of the free edge of the flange (10b).

11. Door according to Claim 1, characterized in that said grooves (16, 17) are arranged in planes substantially perpendicular to one another.

12. Door according to Claim 1, characterized in that said means for retaining the pane (30) on the profiled member (10) consist of a cover-piece (18) substantially in the form of an overturned "L".

13. Door according to Claim 1, characterized in that said cover-piece (18) has a longitudinal edge of one side of the "L" designed to be inserted into said first groove (16) of the part (10a) of the profiled member (10) and a hole (18a) for receiving a screw (19) designed to be engaged with the second (17) of said two longitudinal grooves which lie in planes perpendicular to one another.

14. Door according to Claim 1, characterized in that said seats (11, 13, 21) for housing the gaskets (11, 13) have a cross-section of substantially semi-circular shape, extending in the longitudinal direction along the entire length of the profiled member.

15. Door according to Claim 1, characterized in that said seats (11, 13, 21, 28) have upper ends (11a, 13a, 21a, 28a) of its side wall (11b, 13b, 21b, 28b) extended beyond the ideal line corresponding to the diameter of the seat itself for stably retaining the corresponding section of the associated gasket (12, 14).
